# EUROPEAN PATENT SPECIFICATION

(11) **EP 3 996 326 B1**
(45) Date of publication and mention of the grant of the patent: **26.08.2026**
(21) Application number: 21205063.7
(22) Date of filing: 27.10.2021
(51) Int. Cl.: H04L 9/40, G06F 21/31, G06F 21/60, H04L 9/08

(54) **RFID READER SYSTEM WITH ENCRYPTED COMMUNICATION**
RFID-LESEGERÄTSYSTEM MIT VERSCHLÜSSELTER KOMMUNIKATION
SYSTÈME DE LECTEUR RFID À COMMUNICATION CHIFFRÉE

(30) Priority: 09.11.2020 EP 20206468
(43) Date of publication of application: 11.05.2022
(73) Proprietor: ELATEC GmbH, 82178 Puchheim (DE)
(72) Inventor: VETTER, Thomas, 86974 Apfeldorf (DE); LU, Ming, 82178 Puchheim (DE); SAMSON, Dr. Dominik, 82024 Taufkirchen (DE); GÜNDÜZ, Burhan, 85757 Karlsfeld (DE)
(74) Representative: Lohr, Jöstingmeier & Partner Patent- und Rechtsanwälte mbB

(56) References cited:
- US-A1- 2006 136 717
- US-A1- 2008 189 214
- ANONYMOUS: "Diffie-Hellman key exchange - Wikipedia", 13 August 2020 (2020-08-13), Wikipedia, pages 1 - 11, XP055892952, Retrieved from the Internet <URL:https://en.wikipedia.org/w/index.php?title=Diffie-Hellman_key_exchange&oldid=972720437> [retrieved on 20220217]

## Description

### Field of the invention

The invention relates to an electronic reader device for reading and/or writing RFID devices and to a method of reading and/or writing RFID devices.

### Description of the related art

An RFID reader is disclosed in the European patent application EP 3 264 699 A1.

It comprises an antenna connected to a decoder circuit for decoding a specific code of a specific communication protocol. A more complex reader is disclosed in European patent application EP 3 188085 A1. This device is designed for an encryption, where the encryption and decryption algorithm is stored in a secure element (SE chip). This allows an encrypted communication with the card. The external communication of the reader is not encrypted. US 2008/0130882 A1 discloses a secure printing system based on RFID tags. A RFID tag of a user is read by a reader which forwards information about the user to a printer. The printer may the print any document of the user or any document for which the user is authorized to print. EP3549052 A1 discloses a RFID reader which may be connected via an USB interface to a printer. Documents US 2008/189214 and US 2006/136717 are further relevant prior-art documents.

### Summary of the invention

The problem to be solved by the invention is to provide a secure solution for communication of an RFID reader with a host, which e.g., may be a printer. The solution should be easy to implement and useable over a broad variety of platforms. It should be, at least to a large extent, not vendor specific. The invention is defined in the independent claims.

Solutions of the problem are described in the independent claims. The dependent claims relate to further improvements of the invention.

A very simple and straight forward solution, which is not vendor-specific, is a communication between an RFID reader and a host by a plain keyboard mode. In this mode, the RFID reader simply forwards individual key codes, which replaces manually entering a password or PIN number. By simply adapting the RFID reader to the number or digit entering format, a RFID is enabled to communicate with a printer, without making RFID reader-specific software modifications at the printer. The drawback of this simple system is that the communication between the RFID reader and the host (e.g., printer) may be easily intercepted by accessing the USB connection. The same problem exists for any other hardware connection like RS232, RS485 and others.

This may be improved by encrypting the communication between the RFID reader and the host. Such an encryption would require a specific host or at least a specific software at the host adapted to the encryption of the RFID reader.

In an embodiment, an RFID reader is connected to a host. The RFID reader is configured to read a RFID card and to encrypt of the user information received from the RFID card. The RFID reader may be configured do decrypt any encrypted information received by the RFID card. The RFID reader is further configured to generate an encrypted data package which includes at least encrypted information from the RFID card and to transmit the data package to a host.

The host is connected to the RFID reader and configured to receive the encrypted data package from the RFID reader. The host is further configured to communicate with a decryption service. The decryption service may be in a cloud, part of a cloud and/or accessible via a cloud. The host may forward the encrypted data package to the decryption service.

The decryption service is configured to receive the encrypted data package from the host and to decrypt the data package. The decryption service is further configured to transmit decrypted RFID information including at least part of the decrypted data package which may further include information from the RFID card back to the host. This transmission may be further encrypted, e.g., by using HTTPs and/or TLS.

The host may be configured to access and/or control a certain control service by the decrypted RFID information. Such a service may include a printing service of a printer.

In an embodiment, the RFID reader may be configured to generate a random number as an ephemeral private key

In an embodiment, the RFID reader may be configured to generate a different ephemeral private key (314) for every encrypted data package and to generate the encrypted data package further dependent on the ephemeral private key. Further, the decryption service may be configured to check the ephemeral private key and a public key of the decryption service received from the RFID card. These may be compared to previous data packages and a man-in-the-middle-attack warning may be generated, if two identical packets were received from the RFID card.

A method of communication may include the steps of:
Sending of user information by a RFID card to the RFID reader.

Encrypting of the user information received from the RFID card and generating an encrypted data package thereof by the RFID reader.

Transmission of the encrypted data package by the RFID reader to a host.

Transmission of the encrypted data package by the host to a decryption service. The decryption service may be on a separate server and/or in a cloud.

Decryption of the encrypted data package by the decryption service and generating of decrypted data packages including decrypted RFID information.

Transmission of decrypted RFID information to the host by the decryption service. This transmission may be encrypted by an independent encryption like HTTPs and/
or TLS.

Transmission of the decrypted RFID information of the decrypted data package to a control service.

Further, the cloud may check the encrypted data package received by the host and forward related information to a customer. Such information may include statistic information about number of received encrypted packages, number of accesses and type of access by certain users and information about access times. This may help to enable or block the access of specific users at specific times for specific action. For example, the printing of special documents may be prevented out of business hours.

In an embodiment, the RFID reader may generate two seed numbers p and G. The number p and G are later transmitted together with the user information of the RFID card to the decryption service. These numbers will later be used in a Diffie-Hellmann-Merkle algorithm. In an implementation, both the decryption service and the RFID reader may have at least one preconfigured number p and G. Such, the numbers have not to be transmitted every time.

The RFID reader may generate a random number as an ephemeral private key. This key may be used to calculate a shared secret using a Diffie-Hellmann-key exchange. A symmetrical key used to encrypt the data can be derived from the shared secret using, for example, SHA256.

This embodiment may also protect against man-in-the-middle attacks. The encrypted data package, which is transmitted from the RFID reader to the host, may be dependent on the ephemeral private key and the user information received by the RFID reader. As long as the ephemeral private key or the data received by the RFID reader is different, the encrypted data package is also different. In an embodiment, every time a random ephemeral private key may be generated. This guarantees a different encrypted data package every time.

The decryption service may now check received encrypted data packages. If an encrypted data package is received a second time, a man-in-the-middle attack may have happened. Consequently, the decryption service may reject to decrypt the encrypted data package.

As the communication between the host and the decryption service is performed by a secured channel like HTTPS and/or TLS, no third party may be able to read the communication.

When encrypting the received RFID data, the RFID reader may include user information, which have been transmitted by the RFID card as well as meta-data like transponder type. Such meta-data may be saved to improve user experience in the future.

The system and specifically the decryption service may be configured to track and record user requests received by the RFID reader. This may be done by at least one of the RFID reader, the host, the decryption service or the control service. In case of any suspicious circumstance like login outside business hours, the system may transmit a message to a customer to take further measures against such security threads. The decryption service may identify such circumstances using machine learning.

Herein the term RFID card is used for any item including a RFID transponder, including e.g., an RFID card, a token or a key fob.

### Description of Drawings

In the following the invention will be described by way of example, without limitation of the general inventive concept, on examples of embodiment with reference to the drawings.
Figure 1 shows a basic block diagram of a first embodiment.
Figure 2 shows a flow diagram of a method.
Figure 3 shows data packages

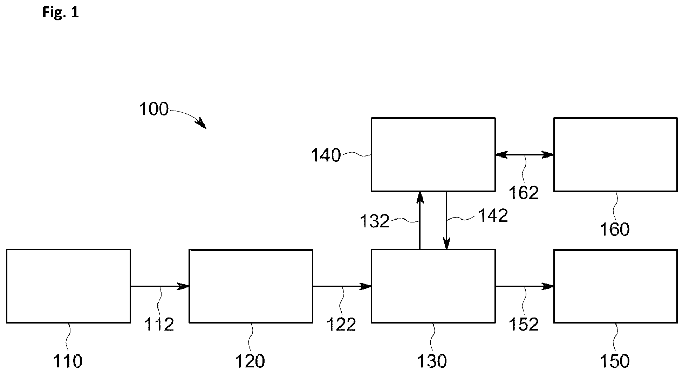

In Figure 1 an RFID reader system 100 is shown. An RFID card 110 may be read by an RFID reader 120, thus transmitting user information 112 of the RFID card to the RFID reader. A host 130 is configured to receive encrypted data packages to be transmitted 122 by the RFID reader. A decryption service, which may be a separate server 140 or may be in a cloud, is configured to receive encrypted data packages 132 transmitted by the host 130. The decryption service may further decrypt these packages and transmit 142 decrypted user information or decrypted data packages back to the host 130. The host 130 is further configured for transmission 152 of decrypted user information to a control service 150. A customer 160 may communicate 162 with the decryption service for control of the service and/or query of access data and/or statistical data.

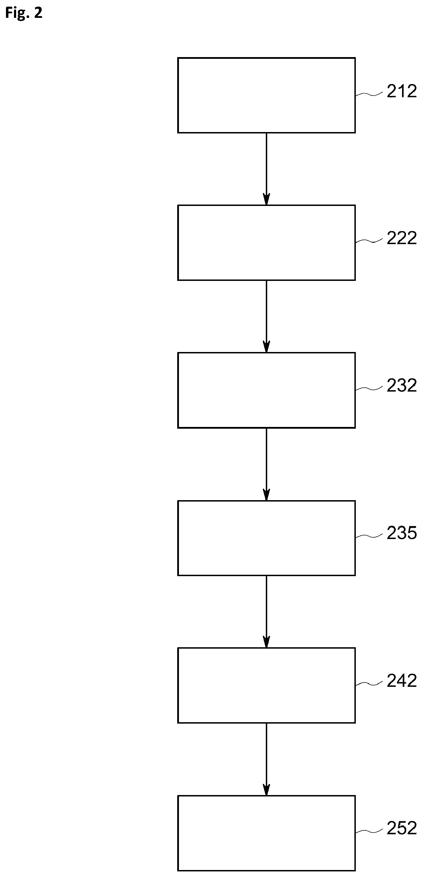

In Figure 2, a flow diagram of a method of encrypted communication is shown. In step 212, user information is transmitted from an RFID card to an RFID reader. In the following step 222, an encrypted data package generated by the RFID reader based on received user information is transmitted to a host. In step 232, the encrypted data package is forwarded by the host to a decryption service. Following this, in step 235 the encrypted data packages is decrypted by the decryption service 140. And decrypted data packages 320 including decrypted RFID information 322 are generated. In step 242, the decrypted RFID information from the decrypted data package is forwarded by the decryption service to the host. Then in step 252, decrypted user information of the decrypted data package is transmitted by the host 130 to the control service 150.

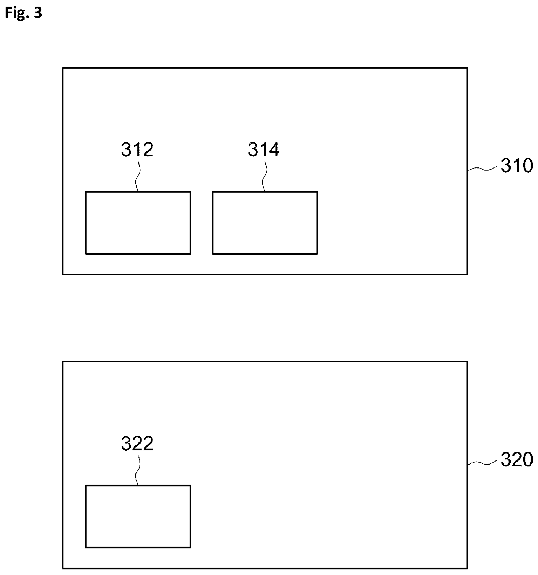

In figure 3, an encrypted data package 310 is shown. It includes at least user information 312 and may further include an ephemeral private key 314. Further, a decrypted data package 320 including decrypted RFID information 322 is shown.

### List of reference numerals

- 100: RFID reader system
- 110: RFID card
- 112: transmission of user information
- 120: RFID reader
- 122: transmission of encrypted data package to host
- 130: host
- 132: transmission of encrypted data package to decryption service
- 140: decryption service
- 142: transmission of decrypted data package to host
- 150: control service
- 152: transmission of decrypted user information to control service
- 160: customer
- 162: customer communication
- 212: transmission of user information
- 222: transmission of encrypted data package to host
- 232: transmission of encrypted data package to decryption service
- 235: decryption of the encrypted data package by the decryption service
- 242: transmission of decrypted RFID information to host
- 252: transmission of decrypted RFID information to control service
- 310: encrypted data package
- 312: user information
- 314: ephemeral private key
- 320: decrypted data package
- 322: decrypted RFID information

## Claims

1. A RFID reader system (100) comprising a host (130) being a printer having a control service (150) being a printing service, an RFID reader, an RFID card (110), a cloud having a decryption service (140),
- the host being connected to the RFID reader (120) and being configured to receive an encrypted data package (310) from the RFID reader (120),
- the RFID reader (120) being configured to read the RFID card (110) and to encrypt the user information (312) received from the RFID card (110) into the encrypted data package (310),
- the decryption service (140) configured to receive the encrypted data package (310) from the host (130) to decrypt the encrypted data package (310), and to transmit a decrypted data package (320) including decrypted RFID information (322) back to the host (130) encrypted by an encryption protocol using HTTPs and/or TLS,
- the control service (150), configured to receive the decrypted RFID information (322) from the host (130).

2. The RFID reader system (100) of the previous claim,
**characterized in, that**
the RFID reader (120) is configured to generate two seed numbers p and G and to transmit these numbers together with the user information (312) received from the RFID card (110) to the decryption service (140) or
the RFID reader (120) and the decryption service (140) have at least one preconfigured set of numbers p and G.

3. The RFID reader system (100) of any of the previous claims,
**characterized in, that**
the RFID reader is configured to generate a random number as an ephemeral private key (314), which may be used to calculate a shared secret for a Diffie-Hellmann-key exchange.

4. The RFID reader system (100) of the previous claims,
**characterized in, that**
the RFID reader is configured to generate a different ephemeral private key (314) for every encrypted data package and to generate the encrypted data package (310) further dependent on the ephemeral private key (314), and a public key of the decryption service (140), and
the decryption service (140) is configured to compare each encrypted data package with previous data packages and to generate a man-in-the-middle-attack warning if an encrypted data package is received a second time from the RFID card.

5. A method of operating an RFID reader system (100) according to one of the preceding claims, wherein the RFID reader system comprises a host connected to an RFID reader, an RFID card, and a decryption service, the method including the steps of:
- sending of user information (312) by the RFID card to the RFID reader,
- encrypting of the user information (312) received from the RFID card and generating an encrypted data package (310) thereof by the RFID reader,
- transmitting of the encrypted data package (310) by the RFID reader to the host, the host being a printer having a control service being a printing service,
- transmitting of the encrypted data package (310) by the host to the decryption service (140), which is in a cloud,
- generating of a decrypted data package (320) including decrypted RFID information (322) by decrypting of the encrypted data package by the decryption service (140),
- transmitting of the decrypted RFID information (322) to the host by the decryption service, the transmitting being encrypted by an encryption protocol using HTTPs and/or TLS,
- receiving of the decrypted RFID information (322) by the control service from the host.

## Patentansprüche

1. Ein RFID-Lesesystem (100) umfassend einen Host (130), der ein Drucker ist mit einem Kontrolldienst (150), welcher ein Druckerdienst ist, einen RFID-Leser (120), eine RFID-Karte (110), eine Cloud mit einem Entschlüsselungsdienst (140), wobei
- der Host mit dem RFID-Leser (120) verbunden ist und konfiguriert ist, um ein verschlüsseltes Datenpaket (310) vom RFID-Leser (120) zu empfangen,
- der RFID-Leser (120) konfiguriert ist, um die RFID-Karte (110) zu lesen und die von der RFID-Karte (110) empfangene Nutzerinformation (312) in das verschlüsselte Datenpaket (310) zu verschlüsseln,
- der Entschlüsselungsdienst (140) konfiguriert ist, um das verschlüsselte Datenpaket (310) vom Host (130) zu empfangen, um das verschlüsselte Datenpaket (310) zu entschlüsseln, und das entschlüsselte Datenpaket (320) einschließlich entschlüsselter RFID-Information (322), verschlüsselt durch ein Verschlüsselungsprotokoll unter Verwendung von HTTPs und/oder TLS, zurück an den Host (130) zu übermitteln,
- der Kontrolldienst (150) konfiguriert ist, um die entschlüsselte RFID-Information (322) vom Host (130) zu empfangen.

2. Der RFID-Leser (100) des vorhergehenden Anspruchs,
**dadurch gekennzeichnet, dass**
der RFID-Leser (120) konfiguriert ist, um zwei Startnummern p und G zu generieren und diese Nummern zusammen mit der von der RFID-Karte (110) empfangenen Nutzerinformation (312) an den Entschlüsselungsdienst (140) zu übermitteln, oder der RFID-Leser (120) und der Entschlüsselungsdienst (140) mindestens einen vorkonfigurierten Satz von Nummern p und G haben.

3. Das RFID-Lesesystem (100) nach einem der vorhergehenden Ansprüche,
**dadurch gekennzeichnet, dass**
der RFID-Leser konfiguriert ist, um eine Zufallsnummer als einen vergänglichen privaten Schlüssel (314) zu generieren, der zur Berechnung eines gemeinsamen Geheimnisses für einen Diffie-Hellmann-Schlüsselaustausch verwendet werden kann.

4. Das RFID-Lesesystem (100) nach den vorhergehenden Ansprüchen,
**dadurch gekennzeichnet, dass**
der RFID-Leser konfiguriert ist, um einen anderen vergänglichen privaten Schlüssel (314) für jedes verschlüsselte Datenpaket zu generieren und das verschlüsselte Datenpaket (310) weiterhin abhängig von dem vergänglichen privaten Schlüssel (314), und einen öffentlichen Schlüssel des Entschlüsselungsdienstes (140) zu generieren, und
der Entschlüsselungsdienst (140) konfiguriert ist, um jedes verschlüsselte Datenpaket mit vorherigen Datenpaketen zu vergleichen und eine Warnung vor einem Man-in-the-Middle-Angriff zu generieren, wenn ein verschlüsseltes Datenpaket ein zweites Mal von der RFID-Karte empfangen wird.

5. Ein Verfahren zum Betreiben eines RFID-Lesesystems (100) nach einem der vorhergehenden Ansprüche,
wobei das RFID-Lesesystem einen mit einem RFID-Leser verbundenen Host, eine RFID-Karte, und einen Entschlüsselungsdienst umfasst,
wobei das Verfahren die folgenden Schritte umfasst:
- Senden von Nutzerinformation (312) durch die RFID-Karte an den RFID-Leser,
- Verschlüsseln der von der RFID-Karte empfangenen Nutzerinformation (312) und Generieren eines verschlüsselten Datenpaketes (310) daraus durch den RFID-Leser,
- Übermitteln des verschlüsselten Datenpaketes (310) durch den RFID-Leser an den Host, wobei der Host ein Drucker ist mit einem Kontrolldienst, welcher ein Druckerdienst ist,
- Übermitteln des verschlüsselten Datenpaketes (310) durch den Host an den Entschlüsselungsdienst (140), welcher in einer Cloud ist,
- Generieren eines entschlüsselten Datenpaketes (320) beinhaltend verschlüsselte RFID-Information (322) durch Entschlüsseln des verschlüsselten Datenpaketes durch den Entschlüsselungsdienst (140),
- Übermitteln der entschlüsselten RFID-Information (322) an den Host durch den Entschlüsselungsdienst, wobei das Übermitteln durch ein Verschlüsselungsprotokoll unter Verwendung von HTTPs und/oder TLS verschlüsselt wird,
- Empfangen der entschlüsselten RFID-Information (322) vom Host durch den Kontrolldienst.

## Revendications

1. Système de lecteur RFID (100) comprenant un hôte (130) qui est une imprimante ayant un service de contrôle (150) qui est un service d'impression, un lecteur RFID, une carte RFID (110), un nuage ayant un service de déchiffrement (140),
- l'hôte étant connecté au lecteur RFID (120) et étant configuré pour recevoir un paquet de données chiffré (310) provenant du lecteur RFID (120),
- le lecteur RFID (120) étant configuré pour lire la carte RFID (110) et pour chiffrer les informations utilisateur (312) reçues en provenance de la carte RFID (110) en le paquet de données chiffré (310),
- le service de déchiffrement (140) étant configuré pour recevoir le paquet de données chiffré (310) provenant de l'hôte (130) afin de déchiffrer le paquet de données chiffré (310), et pour retransmettre à l'hôte (130) un paquet de données déchiffré (320) incluant des informations RFID déchiffrées (322), chiffré par un protocole de chiffrement utilisant HTTPS et/ou TLS,
- le service de contrôle (150) étant configuré pour recevoir les informations RFID déchiffrées (322) provenant de l'hôte (130).

2. Système de lecteur RFID (100) selon la revendication précédente,
**caractérisé en ce que**
le lecteur RFID (120) est configuré pour générer deux nombres de départ p et G et pour transmettre ces nombres conjointement avec les informations utilisateur (312) reçues en provenance de la carte RFID (110) au service de déchiffrement (140), ou
le lecteur RFID (120) et le service de déchiffrement (140) ont au moins un ensemble préconfiguré de nombres p et **G.**

3. Système de lecteur RFID (100) selon l'une quelconque des revendications précédentes,
**caractérisé en ce que**
le lecteur RFID est configuré pour générer un nombre aléatoire servant de clé privée éphémère (314), qui peut être utilisé pour calculer un secret partagé pour un échange de clés de type Diffie-Hellmann.

4. Système de lecteur RFID (100) selon l'une quelconque des revendications précédentes,
**caractérisé en ce que**
le lecteur RFID est configuré pour générer une clé privée éphémère (314) différente pour chaque paquet de données chiffré et pour générer le paquet de données chiffré (310) en fonction en outre de la clé privée éphémère (314), et d'une clé publique du service de déchiffrement (140), et
le service de déchiffrement (140) est configuré pour comparer chaque paquet de données chiffré avec des paquets de données précédents et pour générer un avertissement d'attaque de l'homme du milieu si un paquet de données chiffré est reçu une deuxième fois en provenance de la carte RFID.

5. Procédé d'exploitation d'un système de lecteur RFID (100) selon l'une des revendications précédentes, dans lequel le système de lecteur RFID comprend un hôte connecté à un lecteur RFID, une carte RFID et un service de déchiffrement,
le procédé incluant les étapes suivantes :
- l'envoi d'informations utilisateur (312) par la carte RFID au lecteur RFID,
- le chiffrement des informations utilisateur (312) reçues en provenance de la carte RFID et la génération d'un paquet de données chiffré (310) à partir de celles-ci par le lecteur RFID,
- la transmission du paquet de données chiffré (310) par le lecteur RFID vers l'hôte, l'hôte étant une imprimante ayant un service de contrôle qui est un service d'impression,
- la transmission du paquet de données chiffré (310) par l'hôte vers le service de déchiffrement (140), qui se trouve dans un nuage,
- la génération d'un paquet de données déchiffré (320) incluant des informations RFID déchiffrées (322) par le déchiffrement du paquet de données chiffré par le service de déchiffrement (140),
- la transmission des informations RFID déchiffrées (322) vers l'hôte par le service de déchiffrement, ladite transmission étant chiffrée par un protocole de chiffrement utilisant HTTPS et/ou TLS,
- la réception des informations RFID déchiffrées (322) par le service de contrôle en provenance de l'hôte.
